# EUROPÄISCHE PATENTSCHRIFT

(11) **EP 1 786 599 B1**
(45) Veröffentlichungstag und Bekanntmachung des Hinweises auf die Patenterteilung: **23.04.2008**
(21) Anmeldenummer: 05775833.6
(22) Anmeldetag: 04.08.2005
(51) Int. Cl.: B25B 29/02, B23P 19/06

(54) **HYDRAULISCHE SCHRAUBENSPANNVORRICHTUNG**
HYDRAULIC SCREW CLAMPING DEVICE
DISPOSITIF HYDRAULIQUE DE SERRAGE DE VIS

(30) Priorität: 03.09.2004 DE 102004043145
(43) Veröffentlichungstag der Anmeldung: 23.05.2007
(73) Patentinhaber: Hohmann, Jörg, 59872 Meschede (DE); Hohmann, Frank, 59581 Warstein (DE)
(72) Erfinder: Hohmann, Jörg, 59872 Meschede (DE); Hohmann, Frank, 59581 Warstein (DE)
(74) Vertreter: Christophersen & Partner
(86) Internationale Anmeldenummer: PCT/EP2005/008455
(87) Internationale Veröffentlichungsnummer: WO 2006/027060

(56) Entgegenhaltungen:
- EP-A- 0 200 459
- EP-A- 0 830 919
- CH-A- 552 448
- DE-A1- 3 047 674
- DE-A1- 4 341 707
- US-A1- 2004 165 963

## Beschreibung

Die Erfindung betrifft eine hydraulische Schraubenspannvorrichtung zum Anziehen und Lösen hochbelasteter Schrauben.

Aus der CH 552 448 A ist eine hydraulische Schraubenspannvorrichtung zum Anziehen und Lösen hochbelasteter Schrauben bekannt, die einen sich auf einem mittels eines Gewindebolzens und einer Mutter zu verspannenden Maschinenteil abstützenden Zylinder, eine auf ein Gewindeende des Gewindebolzens aufschraubbare Wechselbuchse und einen oder mehrere in einem Zylinderelement abgedichtet geführte, mit der Wechselbuchse verbundene Ringkolben aufweist. Bei einer Ausführungsform ist der Ringkolben einstückig mit der Wechselbuchse hergestellt und weist eine druckbeaufschlagte, abgeschrägte Ringfläche auf, der eine gleichsinnig abgeschrägte, druckbeaufschlagte Ringfläche des Zylinderelements gegenüber liegt. Der Übergang von der Wechselbuchse zum Ringkolben weist eine abgerundete Hohlkehle auf. Bei einer zweiten Ausführungsform ist ein Ringkolben einstückig mit der Wechselbuchse hergestellt, weist senkrecht zur Zylinderachse verlaufende druckbeaufschlagte und druckabgewandte Ringflächen, die in die Wechselbuchse über Hohlkehlen übergehen, auf. Zwei weitere axial versetzte Ringkolben sind auf die Wechselbuchse aufgeschraubt und weisen abgeschrägte, druckbeaufschlagte Ringflächen auf, die mit ihr zugewandten, gleichsinnig abgeschrägten, druckbeaufschlagten Ringflächen der Zylinderelemente zusammenwirken. Die druckabgewandten Ringflächen dieser Ringkolben verlaufen senkrecht zur Zylinderachse, denen ebenfalls senkrecht zur Zylinderachse verlaufende druckabgewandte Ringflächen der Zylinderelemente gegenüberliegen.

Aus der DE 43 41 707 A1 und der DE 196 38 901 A1 bekannte hydraulische Gewindebolzenspannvorrichtungen derselben Anmelder bestehen aus einem sich auf einem mittels eines Gewindebolzens und einer Mutter zu verspannenden Maschinenteil abstützenden Zylinder, wenigstens einem darin abgedichtet geführten, sich an einer Verlängerung einer auf ein Gewinde des Gewindebolzens aufgeschraubten Wechselbuchse abstützenden, periodisch druckbeaufschlagten, mit dem Zylinder einen Ringraum bildenden Kolben und einer Druckmittelzufuhr zum Ringraum.

Derartige Schraubenspannvorrichtungen haben die Aufgabe, eine genau vorgegebene Vorspannkraft auf eine Schraube aufzubringen, um die auf die Schraube aufgeschraubte Mutter anziehen oder lösen zu können. Hierzu wird eine Wechselbuchse in der Schraubenspannvorrichtung auf das überstehende Gewinde oberhalb einer Mutter aufgeschraubt und danach die Schraubenspannvorrichtung unter hydraulischen Druck gesetzt. Das hat zur Folge, dass die Schraube durch Längen gespannt wird. Die dabei auf die Schraube aufgebrachten Kräfte sind außerordentlich hoch, wodurch die Schraubenspannvorrichtung und deren Einzelteile sehr stark beansprucht werden.

Insbesondere die Wechselbuchse ist bei diesen hydraulischen Schraubenspannvorrichtungen ein hochbeanspruchtes Teil, das nach einer gewissen Anzahl von Schraubendehnungen, d.h. Lastwechseln, im Bereich des Schraubengewindeendes abreißen kann.

Da sich in einem solchen Fall das gesamte System schlagartig entspannt, kann das abgerissene Teil der Gewindebuchse, zusammen mit dem Kolben und dem Zylinder, mit erheblicher Energie weggeschleudert werden und bedeutende Beschädigungen an benachbarten Maschinenteilen sowie Verletzungen der Bedienperson hervorrufen. Um dies zu vermeiden, ist in der DE 43 41 707 A1 eine Fangvorrichtung für diese Teile der Schraubenspannvorrichtung vorgesehen.

Um jedoch einem Abreißen der Wechselbuchse vorzubeugen und ein Überschreiten der von diesen Teilen aufnehmbaren Lastwechsel bis zu einem Ermüdungsbruch zu vermeiden, wird gemäß der DE 196 38 901 A1 angestrebt, die durch Ermüdungsbruch gefährdeten Teile auszuwechseln, bevor ein solcher Ermüdungsbruch eintreten kann. Hierzu ist an der hydraulischen Schraubenspannvorrichtung ein Lastwechselzähler vorgesehen, der durch die periodische Druckbeaufschlagung der Schraubenspannvorrichtung bei jeder Betätigung weitergeschaltet wird, wobei das Zählen von Leerhüben dadurch vermieden wird, dass der Lastwechselzähler nur oberhalb eines vorgebbaren Druckes weiterschaltet.

Diese bekannten hydraulischen Scbraubenspannvorrichtungen haben sich bewährt und lassen sich ein- oder mehrstufig gestalten, um die Kräfte aufzubringen, die für Gewindebolzen aller gängigen Größen erforderlich sind, um eine vorbestimmte Dehnung hervorzurufen.

In der europäischen Patentanmeldung EP 0 200 459 A2 ist eine hydraulische Schraubenspannvorrichtung beschrieben, bei der eine auf den zu spannenden Gewindebolzen aufschraubbare Wechselbuchse einen Bund mit einer Schrägfläche aufweist, an der sich ein auf die Wechselbuchse aufgeschobener Ringkolben abstützt. Der Ringkolben und ein Ringansatz an einem Zylinderelement sind ineinander greifend ausgebildet und aneinander abgedichtet geführt. Die aneinander zugewandten, druckbeaufschlagten Flächen des Ringkolbens und des Zylinderelements sind jeweils gleichsinnig abgeschrägt ausgebildet, so dass auf diese Ringflächen auf Grund der Druckbeaufschlagung ein sehr großes, aufweitendes Biegemoment wirkt, dem nur durch entsprechende Dimensionierung der Elemente begegnet werden kann, um Verschleiß an den aneinander gleitenden Flächen und den Dichtungen zu vermeiden. Da derartige hydraulische Schraubenspannvorrichtungen oft an eng nebeneinander stehenden Schraubenbolzen eingesetzt werden, ist jede Vergrößerung der Abmessung in radialer Richtung nachteilig.

Der vorliegenden Erfindung liegt die Aufgabe zu Grunde, die durch Ermüdungsbruch gefährdeten Teile so zu gestalten, dass sie sich einer hohen Anzahl von Lastwechseln aussetzen lassen, bevor ein Ermüdungsbruch eintreten kann, das heißt, dass diese hochbeanspruchten Einzelteile länger benutzt werden können, bevor sie ausgewechselt werden müssen. Des Weiteren soll eine sowohl im Durchmesser als auch in der Länge kompakte Schraubenspannvorrichtung zur Verfügung gestellt werden, bei der die Abnutzung der aneinander gleitenden Kolben- und Zylinderflächen sowie der jeweiligen Dichtungen möglichst gering ist.

Ausgehend von dieser Aufgabenstellung wird bei einer hydraulischen Schraubenspannvorrichtung zum Anziehen und Lösen hochbelasteter Schrauben mit einem sich auf einem mittels eines Gewindebolzens und einer Mutter zu verspannenden Maschinenteil abstützenden Zylinder und einer auf ein Gewindeende des Gewindebolzens aufschraubbaren Wechselbuchse vorgeschlagen, dass wenigstens ein erster, in einem Zylinderelement abgedichtet geführter Ringkolben auf die Wechselbuchse aufgeschoben ist, der sich an einer über eine abgerundete Hohlkehle in die Außenfläche der Wechselbuchse übergehenden Schrägfläche eines einstückig mit der Wechselbuchse hergestellten Bundes abstützt, dass wenigstens ein zweiter, in einem Zylinderelement abgedichtet geführter Ringkolben auf die Wechselbuchse aufgeschoben ist und sich am ersten Ringkolben abstützt, wobei die druckabgewandten, einander zugewandten Axialringflächen des oder der weiteren Ringkolben und der Ringansätze der Zylinderelemente gleichsinnig abgeschrägt sind, während die druckbeaufschlagten Ringflächen des oder weiteren Ringkolben und der Ringansätze der Zylinderelemente senkrecht zur Zylinderachse verlaufen.

Die besonders hochbelastete Wechselbuchse weist auf ihrer Außenfläche keinerlei Kerbspannungen verursachende Absätze, Gewinde oder dergleichen auf, sondern ist glatt zylindrisch ausgebildet und nur mit einem Bund größeren Durchmessers versehen, dessen Schrägfläche dazu dient, das Biegewiderstandsmoment des Bundes zu vergrößern, da auf diesem Bund die volle Kolbenkraft wirkt. Auf Grund des Übergangs der Schrägfläche in die Wechselbuchse über eine mit großem Radius abgerundete Hohlkehle können an dieser Stelle keine Kerbspannungen auftreten. Der einzige kerbspannungsgefährdete Bereich der Wechselbuchse liegt im Bereich des Gewindeendes, wo eine Verminderung der Kerbspannungen durch Ausrundung des Gewindegrundes und der Übergänge, gegebenenfalls auch durch Rollverdichtung des Gewindegrundes, erreicht wird. Die Wechselbuchse ist somit ein einfaches zylindrisches Bauteil, auf das der erste Ringkolben und gegebenenfalls weitere Ringkolben nur aufgeschoben werden.

Wenn wenigstens zwei Ringkolben auf die Wechselbuchse aufgeschoben sind und sich aneinander abstützen, kann der Maximalhub des ersten sich am Bund der Wechselbuchse abstützenden Ringkolbens größer bemessen sein als der Maximalhub des oder der sich an diesen Ringkolben abstützenden, weiteren, auf die Wechselbuchse geschobenen Ringkolben.

Dies bewirkt, dass bei Auftreten des Maximalhubs nicht die Summe der Kolbenkräfte auf das Ende der Schraubenspannvorrichtung, sondern nur die Kolbenkraft des ersten Ringkolbens wirkt.

Der Maximalhub des ersten Ringkolbens kann durch den durch einen Anschlag begrenzten Maximalweg der Wechselbuchse bestimmt sein, während der Maximalhub eines jeden weiteren Ringkolbens durch den axialen Abstand zwischen den druckabgewandten, einander zugewandten Axialringflächen des oder der weiteren Ringkolben und der Ringansätze der Zylinderelemente bestimmt wird.

Durch eine auf das Zylinderelement für den ersten Ringkolben geschraubte Kappe und ein darin angeordnetes Tellerfederpaket lässt sich der Maximalweg der Wechselbuchse bestimmen, der der Differenz zwischen der Höhe der auf Block zusammengedrückten Tellerfedern und des Abstandes des Kappenbodens von Bund an der Wechselbuchse entspricht.

Vorzugsweise kann der Zylinder der Schraubenspannvorrichtung aus zusammengeschraubten Zylinderelementen bestehen, die jeweils einen nach innen ragenden, einstückig mit dem jeweiligen Zylinderelement hergestellten, ringförmigen, mit jeweils einem Ringkolben zusammenwirkenden Ringansatz aufweisen, wobei jeweils wenigstens eine der Axialringflächen der Ringkolben und/oder der Ringansätze zur Vergrößerung des Biegewiderstandsmoments abgeschrägt ist.

Auf diese Weise lassen sich beliebig viele Zylinderelemente und Ringkolben aneinander reihen, um eine benötigte Vorspannkraft bei vorgegebenen Maximaldruck des Druckerzeugers aufbringen zu können. Hierdurch verändert sich nur die. Bauhöhe der Schraubenspannvorrichtung, nicht jedoch ihr Durchmesser, so dass sie sich auch zum Spannen engstehender Schrauben einsetzen lässt und es möglich ist, auf alle zu spannenden Schrauben eines Maschinenteils derartige Schraubenspannvorrichtungen aufzusetzen und sie gleichzeitig zu betätigen, um ein Verziehen des Bauteils beim Spannen der Schrauben zu vermeiden.

Die auf die Wechselbuchse aufgeschobenen Ringkolben können sich vorzugsweise aneinander mittels damit einstückig hergestellter zylindrischer, die Wechselbuchse umschließenden Verlängerungen abstützen.

Vorzugsweise umschließt ein zylindrischer, mit dem ersten Ringkolben einstückig hergestellter Fortsatz den Bund an der Wechselbuchse, wobei der Winkel der Schrägfläche des Bundes an der Wechselbuchse und der entsprechenden, daran anliegenden, abgeschrägten Axialringfläche des ersten Ringkolbens, der Radius von dessen wirksamer Kolbenfläche und die Wandstärke des den Bund an der Wechselbuchse umschließenden, zylindrischen Fortsatzes so aufeinander abgestimmt sind, dass die durch die Keilwirkung der Schrägflächen aus den auf den ersten Ringkolben wirkenden Axialkräfte des oder der weiteren Ringkolben im ersten Ringkolben entstehenden Radialkräfte im Wesentlichen ohne Aufweitung aufgefangen werden.

Eine Hubkontrollanzeige für die Wechselbuchse lässt sich erreichen, wenn ein von dem Tellerfederpaket umgriffener, zylindrischer Fortsatz der Wechselbuchse durch eine Bohrung in der Kappe geführt ist und mit einer Markierung versehen ist.

Um ein schnelles Aufschrauben der Wechselbuchse auf das Gewindeende der zu spannenden Schraube zu erreichen, kann im Ende des zylindrischen Fortsatzes ein Innensechskant oder dergleichen zum formschlüssigen Ansetzen eines Drehwerkzeugs für die Wechselbuchse angeordnet sein.

Des Weiteren kann die Wechselbuchse eine axiale Durchgangsbohrung aufweisen, durch die sich ein Messstab zum Messen des Schraubenüberstandes und/oder der Schraubendehnung einführen lässt.

Nach erfolgter Dehnung der Schraube mittels der Schraubenspannvorrichtung lässt sich eine zwischen dem Maschinenteil und der Wechselbuchse aufgeschraubte Mutter mit geringen Kräften bis zur Anlage am Maschinenteil von außen anziehen. Dies kann entweder dadurch erfolgen, dass eine mit einem Innensechskant versehene, über die Mutter gesteckte Buchse von außen über ein Zahnrad in Drehung versetzt wird, das durch eine Öffnung im Zylinder eingreift oder dadurch, dass durch eine Öffnung im Zylinder mittels eines Stiftes eine Drehung der Mutter bewirkt wird. Vorzugsweise erfolgt das Beidrehen der Mutter von außen mittels eines aus mehreren Zahnrädern bestehenden, in eine Verzahnung an der Drehhülse eingreifenden Getriebes, dessen zum Beidrehen der Mutter von außen angetriebenes Zahnrad sich gleichsinnig mit der Drehhülse dreht, wodurch eine augenfällige Übereinstimmung zwischen dem Drehantrieb und der Drehung der Drehhülse gegeben ist

Die im Bereich der sich auf dem Maschinenteil abstützenden Zylinders die anzuziehende Mutter formschlüssig umgreifende Drehhülse kann vorzugweise axial gegen Federkraft verschiebbar sein, so dass sie beim Aufsetzen der Schraubenspannvorrichtung und nicht Übereinstimmung der Schlüsselflächen der Drehhülse und der Mutter nach oben wegfedern kann, ohne die Mutter zu beschädigen.

Bei den zu spannenden Schraubenverbindungen werden teilweise Unterlegscheiben eingesetzt, und es werden auch unterschiedliche Mutterhöhen verwendet. Um dies auszugleichen können am Fuß des sich auf dem Maschinenteil abstützenden Zylinders unterschiedlich hohe, auswechselbare Distanzringe angeordnet sein.

Eine leichte Handhabung des erfindungsgemäßen Schraubenspannzylinders ist durch ein das Zylinderelement des ersten Ringkolbens oder die Kappe umgreifenden Ring mit einem klappbaren Traggriff gegeben, der durch einen in eine Nut im Zylinderelement oder der Kappe eingreifenden Seegerring axial gesichert ist.

Die Erfindung wird nachstehend anhand eines in der Zeichnung dargestellten Ausführungsbeispiels des Näheren erläutert. In der Zeichnung zeigen:

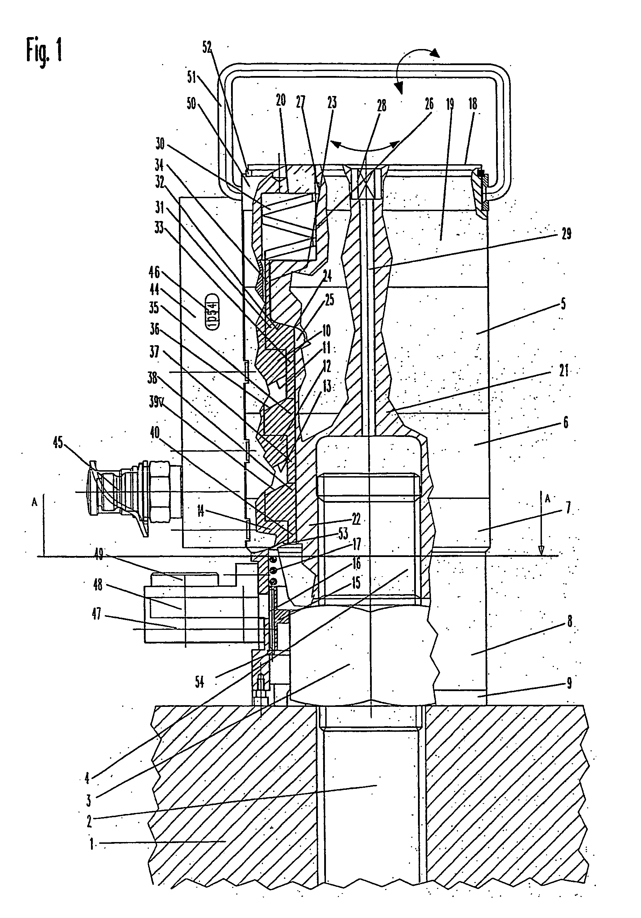

- Fig. 1: Einen schematischen Längsschnitt durch einen erfindungsgemäßen Schraubenspannzylinder und

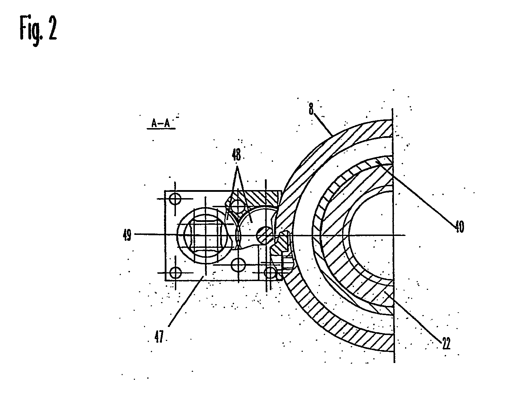

- Fig. 2: einen Schnitt entlang der Linie II-II in Figur 1.

Ein Maschinenteil 1, das z. B. ein Flansch eines Maschinengehäuses sein kann, soll mittels eines Gewindebolzens 2 und einer darauf geschraubten Mutter 3 verspannt werden. Um auf den Gewindebolzen 2 eine genau kontrollierbare Vorspannung aufzubringen und um Torsionsmomente vom Gewindebolzen 2, die eine zusätzliche Belastung des Gewindebolzens 2 darstellen, fernzuhalten, wird die Mutter 3 zunächst nur von Hand zur Anlage an dem Maschinenteil 1 auf den Gewindebolzen 2 aufgeschraubt. Die Länge des Gewindebolzens 2 ist so bemessen, dass über die Mutter 3 ein freies Gewindeende 4 hervorsteht.

Die Schraubenspannvorrichtung besteht aus einem aus Zylinderelementen 5, 6, 7 bestehenden Zylinder, wovon das Zylinderelement 7 um einen sich auf dem Maschinenteil 1 abstützenden Bereich 8 verlängert ist.

Zur Anpassung an unterschiedliche Mutternhöhen und gegebenenfalls zwischen dem Maschinenteil 1 und der Mutter 3 gelegte Unterlegscheiben ist an dem Bereich 8 ein Distanzring 9 angeschraubt. Dieser Distanzring 9 ist gegen andere Distanzringe mit unterschiedlicher Höhe auswechselbar.

Die Zylinderelemente 5, 6, 7 sind miteinander verschraubt und weisen mit Dichtungen versehene Ringansätze 10, 12 und 14 auf, von denen zumindest eine Axialringfläche 11, 13, 53 abgeschrägt ist, um das Biegewiderstandsmoment der Ringansätze 10, 12, 14 zu erhöhen und damit deren Verschleiß erhöhende Verformung zu vermindern.

Im sich am Maschinenteil 1 abstützenden Bereich 8 ist eine Drehhülse 15 angeordnet, die mit einem die Mutter 3 formschlüssig umgreifenden Innensechskant versehen ist. Die Außenfläche der Drehhülse 15 ist mit einer Verzahnung 16 versehen. Gegen Herausfallen aus dem Bereich 8 ist die Drehhülse 15 mittels eines Seegerrings 54 gesichert.

Um beim Aufsetzen der Schraubenspannvorrichtung auf das Maschinenteil 1 eine Beschädigung der Mutter 3 zu vermeiden, wenn der Innensechskant der Drehhülse 15 gegenüber der Mutter 3 verdreht ist, ist die Drehhülse 15 gegen die Kraft einer Druckfeder 17 axial verschiebbar.

Auf das Ende des Zylinderelements 5 ist ein zylindrischer Bereich 19 einer Kappe 18 aufgeschraubt, die einen kräftig ausgebildeten Boden 20 aufweist.

In dem aus den Zylinderelementen 5, 6, 7 gebildeten Zylinder ist eine Wechselbuchse 21 angeordnet, deren Gewindeteil 22 auf das Gewindeende 4 des Gewindebolzens 2 aufschraubbar ist. Am zum Gewindeteil 22 entgegengesetzten Ende der Wechselbuchse 21 ist ein Bund 23 mit einer Schrägfläche 24 angeordnet, die über eine mit großem Radius ausgerundete Hohlkehle 25 in den zylindrischen Bereich der Wechselbuchse 21 übergeht.

Vom Bund 23 erstreckt sich ein zylindrischer Fortsatz 26 kleineren Durchmessers durch eine Bohrung im Boden 20 der Kappe 18 hindurch. In diesem zylindrischen Fortsatz 26 ist eine Ringnut 27 angeordnet, die farbig ausgelegt sein kann und eine Hubkontrollanzeige für die Wechselbuchse 21 darstellt. Wenn nämlich diese Ringnut 27 aus dem Boden 20 der Kappe 18 heraustritt, ist der maximale Weg der Wechselbuchse 21 erreicht.

Zentrisch im zylindrischen Fortsatz 26 ist ein Sechskant 28 oder dergleichen zum formschlüssigen Eingriff eines Drehwerkzeugs, beispielsweise eines Akkuschraubers, angeordnet, um die Wechselbuchse 21 schnell auf das Gewindeende 4 des Gewindebolzens 2 aufschrauben zu können. Des Weiteren reicht eine Durchgangsbohrung 29 vom Ende des zylindrischen Fortsatzes 26 bis zum Gewindeteil 22 der Wechselbuchse 21. In diese Durchgangsbohrung 29 lässt sich ein Messstab einführen, mittels dessen sich der Überstand des Gewindeendes 4 des Gewindebolzens 2 und auch die Dehnung des Gewindebolzens 2 beim Spannen mittels der Schraubenspannvorrichtung messen lässt.

Zwischen dem Bund 23 und dem Boden 20 der Kappe 18 ist ein Tellerfederpaket 30 angeordnet, das als Rückholfeder für die Wechselbuchse 21 und die Ringkolben 31, 35, 38 dient. Dieses Tellerfederpaket 30 zeichnet sich durch hohe Rückstellkräfte bei kleinen Einbaumaßen aus.

Der maximale Weg der Wechselbuchse 21 ergibt sich damit aus der Differenz zwischen dem Abstand des Bundes 23 vom Boden 20 der Kappe 18 und der Blockhöhe des Tellerfederpakets 30.

Auf den zylindrischen Bereich der Wechselbuchse 20 ist ein erster Ringkolben 31 geschoben, dessen Schrägfläche 32 an der Schrägfläche 24 des Bundes 23 anliegt. Der erste Ringkolben 31 weist eine den zylindrischen Bereich der Wechselbuchse 21 umgreifende zylindrische Verlängerung 33 sowie einen den Bund 23 umgreifenden zylindrischen Fortsatz 34 auf. An der zylindrischen Verlängerung 33 des ersten Ringkolbens 31 stützt sich ein zweiter Ringkolben 35 ab, der ebenfalls mit einer zylindrischen Verlängerung 37 versehen ist. Der zweite Ringkolben 35 weist eine Schrägfläche 36 auf, wodurch das Biegewiderstandsmoment des Ringkolbens 35 erhöht wird. An der zylindrischen Verlängerung 37 des zweiten Ringkolben 35 stützt sich ein dritter Ringkolben 38 ab, der ebenfalls mit einer das Biegewiderstandsmoment erhöhenden Schrägfläche 39 versehen ist und eine zylindrische Verlängerung 40 aufweist. Alle Ringkolben 31, 35, 38 sind gegenüber den Zylinderelementen 5, 6, 7 mittels im Einzelnen nicht dargestellter Dichtelemente abgedichtet.

Der Maximalhub der Ringkolben 35 und 38 wird durch den Anschlag der Schrägfläche 36 an der Schrägfläche 11 und der Schrägfläche 39 an der Schrägfläche 13 begrenzt, während der Maximalhub des Ringkolbens 31 und damit der Maximalweg der Wechselbuchse 21, wie bereits erwähnt, durch die Differenz zwischen dem Abstand des Bodens 20 der Kappe 18 vom Bund 23 und der Blockhöhe des Tellerfederpakets 30 bestimmt wird. Wenn diese Maximalhübe zurückgelegt werden, wirkt auf den Boden 20 der Kappe 18 nur die Kolbenkraft des Kolbens 31, da die Kolbenkraft der Ringkolben 35, 38 durch die Ringansätze 10, 12 an den Ringelementen 5, 6 aufgenommen wird.

Ein Druckmittelverteiler 44 mit einem Anschlussnippel 45 für eine Hydraulikleitung ist abgedichtet an die Zylinderelemente 5, 6, 7 geschraubt. Von diesem Druckmittelverteiler 44 wird Druckmittel den Zylinderräumen zwischen den Ringansätzen 10, 12, 14 und den Ringkolben 31, 35, 38 zugeführt.

Am Druckmittelverteiler 44 ist ein Lastwechselzähler 46 angebracht, der die auf die Wechselbuchse 21 wirkenden Lasthübe unter Vermeidung des Zählens von Leerhüben zählt, wodurch eine Anzeige zum Auswechseln der Wechselbuchse 21 gegeben ist, bevor ein Ermüdungsbruch eintritt.

Die Drehung der Drehhülse 15 wird durch ein Getriebe 47 bewirkt, in dem mindestens ein Zahnradpaar 48 angeordnet ist und mit der Verzahnung 16 an der Drehhülse 15 in Eingriff steht. Wird das erste Zahnrad im Getriebe 47 mittels einer in einen Innenvierkant 49 eingesetzten Drehvorrichtung gedreht, dreht sich die Drehhülse 15 gleichsinnig, so dass eine augenfällige Übereinstimmung zwischen der Drehung des Innenvierkants 49 und der Mutter 3 erreicht wird.

Eine einfache Handhabung der Schraubenspannvorrichtung ist durch einen an einem Ring 50 befestigten Klappgriff 51 gegeben. Dieser Ring 50 umgreift den zylindrischen Bereich 19 der Kappe 18 und ist axial mittels eines Seegerrings 52 gesichert. Dadurch ist der Klappgriff 51 um die Achse der Schraubenspannvorrichtung in allen Richtungen drehbar.

## Patentansprüche

1. Hydraulische Schraubenspannvorrichtung zum Anziehen und Lösen hochbelasteter Schrauben mit
- einem sich auf einem mittels eines Gewindebolzens (2) und einer Mutter (3) zu verspannenden Maschinenteil (1) abstützenden Zylinder (5, 6, 7, 8),
- einer auf ein Gewindeende (4) des Gewindebolzens (2) aufschraubbaren Wechselbuchse (21),
- einem oder mehreren, in einem Zylinderelement (5) abgedichtet geführten, mit der Wechselbuchse (2) verbundenen Ringkolben (31, 35, 38),
**dadurch gekennzeichnet,**
**dass** die Ringkolben (31, 35, 38) auf die Wechselbuchse aufgeschoben sind,
**dass** sich der Ringkolben (31) an einer über eine abgerundete Hohlkehle (25) in die Außenfläche der Wechselbuchse (21) übergehenden Schrägfläche (24) eines einstückig mit der Wechselbuchse (21) hergestellten Bundes (23) abstützt,
- sich die weiteren, in dem Zylinderelement (6) abgedichtet geführten Ringkolben (35, 38) am ersten Ringkolben (31) und aneinander abstützen,
- jeweils gleichsinnig abgeschrägte, druckabgewandte, einander zugewandte Axialringflächen (36, 39; 11, 13) an dem oder den weiteren Ringkolben (35, 38) und den Ringansätzen (10, 22) der Zylinderelemente (5, 6) und
- senkrecht zur Zylinderachse verlaufende, druckbeaufschlagte Ringflächen an dem oder den weiteren Ringkolben (35, 38) und an den Ringansätzen (10, 12) der Zylinderelemente (5,6) vorgesehen sind.

2. Schraubenspannvorrichtung nach Anspruch 1, bei der wenigstens zwei Ringkolben (31, 35) auf die Wechselbuchse (21) aufgeschoben sind und sich aneinander abstützen, wobei der Maximalhub des ersten, sich am Bund (23) der Wechselbuchse (21) abstützenden Ringkolbens (31) größer bemessen ist als der Maximalhub des oder der sich an diesem Ringkolben (31) abstützenden, weiteren, auf die Wechselbuchse (21) geschobenen Ringkolben (35).

3. Schraubenspannvorrichtung nach Anspruch 2, bei der der Maximalhub des ersten Ringkolbens (31) durch den durch einen Anschlag (20) begrenzten Maximalweg der Wechselbuchse (21) bestimmt wird, während der Maximalhub eines jeden weiteren Ringkolbens (35, 38) durch den axialen Abstand zwischen den druckabgewandten, einander zugewandten Axialringflächen (36, 39, 11, 13) des oder der weiteren Ringkolben (35, 38) und der Ringansätze (10, 12) der Zylinderelemente (6, 7) bestimmt wird.

4. Schraubenspannvorrichtung nach Anspruch 2 oder 3, bei der der Maximalweg der Wechselbuchse (21) durch eine auf das Zylinderelement (5) für den ersten Ringkolben (31) geschraubte Kappe (18) und ein darin angeordnetes Tellerfederpaket (30) bestimmt wird.

5. Schraubenspannvorrichtung nach einem der Ansprüche 1 bis 4, bei der der Zylinder aus zusammengeschraubten Zylinderelementen (5, 6, 7) besteht, die jeweils einen nach innen ragenden, einstückig mit den jeweiligen Zylinderelementen (5, 6, 7) hergestellten, ringförmigen, mit jeweils einem Ringkolben (31, 35, 38) zusammenwirkenden Ringansatz (10, 12, 14) aufweisen, wobei jeweils wenigstens eine der Axialringflächen (36, 39; 11, 13) der Ringkolben (35, 38) und/oder der Ringansätze (10, 12) zur Vergrößerung des Biegewiderstandsmoments abgeschrägt ist.

6. Schraubenspannvorrichtung nach einem der Ansprüche 1 bis 5, bei der sich die Ringkolben (31, 35, 38) aneinander mittels damit einstückig hergestellter, zylindrischer die Wechselbuchse (21) umschließenden Verlängerungen (33, 37) abstützen.

7. Schraubenspannvorrichtung nach einem der Ansprüche 1 bis 6, bei der ein zylindrischer, mit dem ersten Ringkolben (31) einstückig hergestellter Fortsatz (34) den Bund (23) an der Wechselbuchse (21) umschließt.

8. Schraubenspannvorrichtung nach Anspruch 7, bei der der Winkel der Schrägfläche (24) des Bundes (23) an der Wechselbuchse (21) und der entsprechenden, daran anliegenden, abgeschrägten Axialringfläche (32) des ersten Ringkolbens (31), der Radius von dessen wirksamer Kolbenfläche und die Wandstärke des den Bund (32) an der Wechselbuchse (34) umschließenden, zylindrischen Fortsatzes (34) so aufeinander abgestimmt sind, dass die durch die Keilwirkung der Schrägflächen (24, 32) aus den auf den ersten Ringkolben (31) wirkenden Axialkräften des oder der weiteren Ringkolben (35, 38) im ersten Ringkolben (31) entstehenden Radialkräfte im Wesentlichen ohne Aufweitung aufgefangen werden.

9. Schraubenspannvorrichtung nach einem der Ansprüche 6 bis 8, bei der ein von dem Tellerfederpaket (30) umgriffener, zylindrischer Fortsatz (26) der Wechselbuchse (21) durch eine Bohrung in der Kappe (18) geführt ist, der mit einer Hubkontrollanzeige (27) versehen ist.

10. Schraubenspannvorrichtung nach Anspruch 9, bei der im Ende des zylindrischen Fortsatzes (26) ein Innensechskant (28) oder dergleichen zum formschlüssigen Ansetzen eines Drehwerkzeugs für die Wechselbuchse (21) angeordnet ist.

11. Schraubenspannvorrichtung nach Anspruch 9 oder 10, bei der die Wechselbuchse (21) eine axiale Durchgangsbohrung (29) zum Einführen eines Messstiftes und Messen des Schraubenüberstandes und/oder der Schraubendehnung aufweist.

12. Schraubenspannvorrichtung nach einem der Ansprüche 2 bis 11, bei der jedem zwischen einem Ringkolben (31, 35, 38) und einem Ringansatz (10, 12, 14) gebildeten Ringzylinderraum Druckmittel über einen an den Zylinderelementen (5, 6, 7) abgedichtet verschraubten Druckmittelverteiler (44) mit einem Anschlussnippel (45) für einen Druckmittelschlauch zugeführt wird.

13. Schraubenspannvorrichtung nach Anspruch 12 mit einem in den Druckmittelverteiler (44) integrierten Lastwechselzähler (46).

14. Schraubenspannvorrichtung nach einem der Ansprüche 1 bis 13, bei der im Bereich (8) des sich auf dem Maschinenteil (1) abstützenden Zylinders (7) eine die anzuziehende Mutter (3) formschlüssig umgreifende, axial gegen Federkraft (17) verschiebbare Drehhülse (15) angeordnet ist.

15. Schraubenspannvorrichtung nach Anspruch 14, bei der am Zylinder (8) im Bereich der Drehhülse (15) ein in eine Verzahnung (1b) an der Drehhülse (15) eingreifendes Getriebe (47) aus mehreren Zahnrädern (48) angeordnet ist, dessen zum Beidrehen der Mutter (3) von außen angetriebenes Zahnrad (48) sich gleichsinnig mit der Drehhülse (15) dreht.

16. Schraubenspannvorrichtung nach einem der Ansprüche 1 bis 15, bei der am Fuß des sich auf dem Maschinenteil abstützenden Zylinders (7, 8) unterschiedlich hohe, auswechselbare Distanzringe (9) angeordnet sind.

17. Schraubenspannvorrichtung nach einem der Ansprüche 1 bis 16, bei der ein das Zylinderelement (5) des ersten Ringkolbens (31) oder die Kappe (18) umgreifender Ring (50) mit einem klappbaren Tragegriff (51) durch einen Seegerring (52) axial gesichert ist.

## Claims

1. Hydraulic screw tensioning device for tightening and loosening highly stressed screws, comprising:
- a cylinder (5, 6, 7, 8) which is supported on a machine part (1) that is to be clamped by means of a threaded bolt (2) and a nut (3),
- an exchangeable bushing (21) which can be screwed onto a threaded end (4) of the threaded bolt (2),
- one or more annular pistons (31, 35, 38) which are guided in a sealed manner in a cylinder element (5) and are connected to the exchangeable bushing (2),
**characterised**
**in that** the annular pistons (31, 35, 38) are pushed onto the exchangeable bushing,
**in that** the annular piston (31) is supported against an inclined surface (24) of a collar (23) made in one piece with the exchangeable bushing (21), the inclined surface merging into the outer surface of the exchangeable bushing (21) via a rounded groove (25),
- the further annular pistons (35, 38) which are guided in a sealed manner in the cylinder element (6) are supported against the first annular piston (31) and against one another,
- facing axial annular surfaces (36, 39; 11, 13) which are angled in the same direction and are remote from the pressure are provided on the one or more further annular pistons (35, 38) and on the annular shoulders (10, 22) of the cylinder elements (5, 6), and
- annular surfaces which run perpendicular to the cylinder axis and which are subjected to pressure are provided on the one or more further annular pistons (35, 38) and on the annular shoulders (10, 12) of the cylinder elements (5, 6).

2. Screw tensioning device according to claim 1, in which at least two annular pistons (31, 35) are pushed onto the exchangeable bushing (21) and are supported against one another, wherein the maximum stroke of the first annular piston (31), which is supported against the collar (23) of the exchangeable bushing (21), is greater than the maximum stroke of the one or more further annular pistons (35) which are pushed onto the exchangeable bushing (21) and are supported against said annular piston (31).

3. Screw tensioning device according to claim 2, in which the maximum stroke of the first annular piston (31) is determined by the maximum travel of the exchangeable bushing (21), which is delimited by a stop (20), while the maximum stroke of each further annular piston (35, 38) is determined by the axial distance between the facing axial annular surfaces (36, 39, 11, 13) of the one or more further annular pistons (35, 38), which annular surfaces are remote from the pressure, and the annular shoulders (10, 12) of the cylinder elements (6, 7).

4. Screw tensioning device according to claim 2 or 3, in which the maximum travel of the exchangeable bushing (21) is determined by a cap (18), which is screwed onto the cylinder element (5) for the first annular piston (31), and a plate spring set (30) arranged therein.

5. Screw tensioning device according to any one of claims 1 to 4, in which the cylinder consists of cylinder elements (5, 6, 7) which are screwed together and which each have an inwardly protruding annular shoulder (10, 12, 14) which is made in one piece with the respective cylinder elements (5, 6, 7) and cooperates with a respective annular piston (31, 35, 38), wherein in each case at least one of the axial annular surfaces (36, 39; 11, 13) of the annular pistons (35, 38) and/or the annular shoulders (10, 12) is angled in order to increase the moment of resistance to bending.

6. Screw tensioning device according to any one of claims 1 to 5, in which the annular pistons (31, 35, 38) are supported against one another by means of cylindrical prolongations (33, 37) which are made in one piece therewith and surround the exchangeable bushing (21).

7. Screw tensioning device according to any one of claims 1 to 6, in which a cylindrical extension (34) which is made in one piece with the first annular piston (31) surrounds the collar (23) on the exchangeable bushing (21).

8. Screw tensioning device according to claim 7, in which the angle of the inclined surface (24) of the collar (23) on the exchangeable bushing (21) and the corresponding angled axial annular surface (32) of the first annular piston (31) which bears against it, the radius of the effective piston surface of said first annular piston and the wall thickness of the cylindrical extension (34) which surrounds the collar (32) on the exchangeable bushing (34) are adapted to one another in such a way that the radial forces produced in the first annular piston (31) as a result of the wedge effect of the inclined surfaces (24, 32) caused by the axial forces of the one or more further annular pistons (35, 38) acting upon the first annular piston (31) are substantially absorbed without expansion.

9. Screw tensioning device according to any one of claims 6 to 8, in which a cylindrical extension (26) of the exchangeable bushing (21), which is surrounded by the plate spring set (30), is guided through a bore in the cap (18) which is provided with a stroke control indicator (27).

10. Screw tensioning device according to claim 9, in which a hexagon socket (28) or the like is arranged in the end of the cylindrical extension (26) for the form-fitting engagement of a turning tool for the exchangeable bushing (21).

11. Screw tensioning device according to claim 9 or 10, in which the exchangeable bushing (21) has an axial through-bore (29) for introducing a measuring pin and measuring the screw projection and/or the screw extension.

12. Screw tensioning device according to any one of claims 2 to 11, in which each annular cylinder chamber formed between an annular piston (31, 35, 38) and an annular shoulder (10, 12, 14) is supplied with pressure medium via a pressure medium distributor (44) which is screwed onto the cylinder elements (5, 6, 7) in a sealed manner and has a connection nipple (45) for a pressure medium hose.

13. Screw tensioning device according to claim 12, comprising a load cycle counter (46) which is integrated in the pressure medium distributor (44).

14. Screw tensioning device according to any one of claims 1 to 13, in which a rotary sleeve (15) which surrounds in a form-fitting manner the nut (3) to be tightened and can be displaced axially counter to a spring force (17) is arranged in the region (8) of the cylinder (7) which is supported on the machine part (1).

15. Screw tensioning device according to claim 14, in which a gear mechanism (47) which consists of a plurality of toothed wheels (48) and which engages in a toothing (1b) on the rotary sleeve (15) is arranged on the cylinder (8) in the region of the rotary sleeve (15), wherein the toothed wheel (48) of said gear mechanism which is externally driven to rotate the nut (3) rotates in the same direction as the rotary sleeve (15).

16. Screw tensioning device according to any one of claims 1 to 15, in which exchangeable spacers (9) of different height are arranged at the base of the cylinder (7, 8) which is supported on the machine part (1).

17. Screw tensioning device according to any one of claims 1 to 16, in which a ring (50) which surrounds the cylinder element (5) of the first annular piston (31) or the cap (18) and has a folding handle (51) is secured by a snap ring (52).

## Revendications

1. Dispositif hydraulique de serrage de vis destiné à serrer et à desserrer des vis fortement chargées avec
- un cylindre (5, 6, 7, 8) s'appuyant sur une pièce de machine (1) à serrer au moyen d'un boulon fileté (2) et d'un écrou (3),
- une douille interchangeable (21) pouvant être vissée sur une extrémité filetée (4) du boulon fileté (2),
- un ou plusieurs pistons annulaires (31, 35, 38) reliés à la douille interchangeable (2), guidés de manière étanche dans un élément du cylindre (5),
**caractérisé en ce que**
les pistons annulaires (31, 35, 38) sont poussés sur la douille interchangeable,
le piston annulaire (31) s'appuie contre une face oblique (24) se transformant en une gorge creuse (25) arrondie dans la surface externe de la douille interchangeable (21) d'un épaulement (23) fabriqué d'un seul tenant avec la douille interchangeable (21),
- les autres pistons annulaires (35, 38) guidés de manière étanche dans l'élément du cylindre (6) s'appuient contre le premier piston annulaire (31) et les uns contre les autres,
- des surfaces annulaires axiales (36, 39 ; 11, 13) dirigées les unes vers les autres, opposées à la pression, biseautées respectivement dans le même sens sont prévues sur le ou les autres pistons annulaires (35, 38) et les épaulements annulaires (10, 22) des éléments du cylindre (5, 6) et
- des surfaces annulaires mises sous pression, s'étendant perpendiculairement à l'axe du cylindre, sont prévues sur le ou les autres pistons annulaires (35, 38) et sur les épaulements annulaires (10, 12) des éléments du cylindre (5, 6).

2. Dispositif de serrage de vis selon la revendication 1, dans lequel au moins deux pistons annulaires (31, 35) sont poussés sur la douille interchangeable (21) et s'appuient l'un contre l'autre, la course maximale du premier piston annulaire (31) s'appuyant sur l'épaulement (23) de la douille interchangeable (21) étant mesurée plus grande que la course maximale du ou des autres pistons annulaires (35) poussés sur la douille interchangeable (21), s'appuyant sur ce piston annulaire (31).

3. Dispositif de serrage de vis selon la revendication 2, dans lequel la course maximale du premier piston annulaire (31) est déterminée par la course maximale de la douille interchangeable (21) limitée par une butée (20), tandis que la course maximale d'un tout autre piston annulaire (35, 38) est déterminée par la distance axiale entre les surfaces annulaires axiales (36, 39, 11, 13) dirigées les unes vers les autres, opposées à la pression du ou des autres pistons annulaires (35, 38) et des épaulements annulaires (10, 12) des éléments du cylindre (6, 7).

4. Dispositif de serrage de vis selon la revendication 2 ou 3, dans lequel la course maximale de la douille interchangeable (21) est déterminée par un capuchon (18) vissé sur l'élément du cylindre (5) pour le premier piston annulaire (31) et un groupe de rondelles-ressorts (30) disposé à l'intérieur.

5. Dispositif de serrage de vis selon l'une quelconque des revendications 1 à 4, dans lequel le cylindre se compose d'éléments de cylindre vissés (5, 6, 7) qui présentent respectivement un épaulement annulaire (10, 12, 14) coopérant avec respectivement un piston annulaire (31, 35, 38), fabriqué d'un seul tenant avec les éléments du cylindre (5, 6, 7) respectifs, dépassant vers l'intérieur, respectivement au moins l'une des surfaces annulaires axiales (36, 39 ; 11, 13) des pistons annulaires (35, 38) et/ou des épaulements annulaires (10, 12) étant biseautée pour augmenter le couple de résistance à la flexion.

6. Dispositif de serrage de vis selon l'une quelconque des revendications 1 à 5, dans lequel les pistons annulaires (31, 35, 38) s'appuient l'un contre l'autre au moyen de rallonges (33, 37) cylindriques entourant la douille interchangeable (21), fabriquées d'un seul tenant avec ceux-ci.

7. Dispositif de serrage de vis selon l'une quelconque des revendications 1 à 6, dans lequel un prolongement (34) cylindrique, fabriqué d'un seul tenant avec le premier piston annulaire (31) entoure l'épaulement (23) sur la douille interchangeable (21).

8. Dispositif de serrage de vis selon la revendication 7, dans lequel l'angle de la face oblique (24) de l'épaulement (23) sur la douille interchangeable (21) et de la surface annulaire axiale (32) correspondante biseautée, reposant dessus, du premier piston annulaire (31), le rayon de sa surface de piston utile et l'épaisseur de paroi du prolongement (34) cylindrique, entourant l'épaulement (32) sur la douille interchangeable (34) sont adaptés les uns aux autres de telle sorte que les forces radiales apparaissant par l'effet de coincement des faces obliques (24, 32) à partir des forces axiales agissant sur le premier piston annulaire (31) du ou des autres pistons annulaires (35, 38) dans le premier piston annulaire (31) soient essentiellement absorbées sans élargissement.

9. Dispositif de serrage de vis selon l'une quelconque des revendications 6 à 8, dans lequel un prolongement (26) cylindrique, entouré par le groupe rondelles-ressorts (30) de la douille interchangeable (21) traverse un perçage dans le capuchon (18), lequel prolongement est pourvu d'un affichage de contrôle de la course (27).

10. Dispositif de serrage de vis selon la revendication 9, dans lequel un six pans creux (28) ou similaires est disposé dans l'extrémité du prolongement (26) cylindrique pour mettre en place par coopération de forme un outil de vissage pour la douille interchangeable (21).

11. Dispositif de serrage de vis selon la revendication 9 ou 10, dans lequel la douille interchangeable (21) présente un perçage traversant (29) axial pour l'introduction d'une tige de mesurage et la mesure du dépassement des vis et/ou l'extension des vis.

12. Dispositif de serrage de vis selon l'une quelconque des revendications 2 à 11, dans lequel du fluide sous pression est amené à chaque espace de cylindre annulaire formé entre un piston annulaire (31, 35, 38) et un épaulement annulaire (10, 12, 14) par le biais d'un dispositif de distribution (44) de fluide sous pression vissé de manière étanche sur les éléments du cylindre (5, 6, 7) doté d'un manchon de raccordement (45) pour un tuyau de fluide sous pression.

13. Dispositif de serrage de vis selon la revendication 12, avec un compteur de cycles d'effort (46) intégré dans le dispositif de distribution (44) de fluide sous pression.

14. Dispositif de serrage de vis selon l'une quelconque des revendications 1 à 13, dans lequel une douille rotative (15) pouvant se déplacer axialement contre la force élastique, entourant par coopération de forme l'écrou à serrer (3) est disposée dans la zone (8) du cylindre (7) s'appuyant sur la pièce de machine (1).

15. Dispositif de serrage de vis selon la revendication 14, dans lequel un engrenage (47) composé de plusieurs roues dentées (48) s'engageant dans une denture (1 b) sur la douille rotative (15) est disposé sur le cylindre (8) dans la zone de la douille rotative (15), dont la roue dentée (48) entraînée par l'extérieur pour mettre en panne l'écrou (3) se pivote dans le même sens que la douille rotative (15).

16. Dispositif de serrage de vis selon l'une quelconque des revendications 1 à 15, dans lequel des bagues d'écartement (9) interchangeables, de hauteurs différentes sont disposées au pied du cylindre (7, 8) s'appuyant sur la pièce de machine.

17. Dispositif de serrage de vis selon l'une quelconque des revendications 1 à 16, dans lequel un anneau (50) entourant l'élément du cylindre (5) du premier piston annulaire (31) ou le capuchon (18) avec une poignée de manutention (51) rabattable est fixé axialement par un circlip (52).
